# EUROPÄISCHE PATENTSCHRIFT

(11) **EP 1 852 618 B1**
(45) Veröffentlichungstag und Bekanntmachung des Hinweises auf die Patenterteilung: **08.07.2015**
(21) Anmeldenummer: 07008933.9
(22) Anmeldetag: 03.05.2007
(51) Int. Cl.: F16C 19/49, F16C 19/54

(54) **Wälzlageranordnung**
Rolling bearing device
Dispositif de palier à roulement

(30) Priorität: 04.05.2006 DE 202006007260 U
(43) Veröffentlichungstag der Anmeldung: 07.11.2007
(73) Patentinhaber: IMO Momentenlager GmbH, 91350 Gremsdorf (DE)
(72) Erfinder: Frank, Hubertus, 91315 Höchstadt a.d. Aisch (DE); Hofmann, Georg, 95490 Mistelgau (DE); Russ, Erich, 91350 Gremsdorf (DE)
(74) Vertreter: Küchler, Stefan

(56) Entgegenhaltungen:
- CN-A- 1 054 819
- DE-A1- 2 614 904
- FR-A1- 2 387 373
- JP-A- 2005 061 218
- JP-A- 2005 249 189
- JP-A- 2006 070 909
- US-A- 1 195 756
- US-A- 2 269 684
- US-A- 2 488 825
- US-A- 4 422 697
- US-A- 4 453 836

## Beschreibung

Die Erfindung richtet sich auf eine Wälzlageranordnung, insbesondere für eine Drehverbindung, mit zwei konzentrisch zueinander sowie zumindest bereichsweise ineinander angeordneten Ringen, sowie mit einem Spalt zwischen diesen Ringen, so dass sie um eine gedachte, zur Ringebene etwa lotrechte Achse im Zentrum der Ringe gegeneinander verdrehbar sind, wobei im Bereich des Spaltes zwischen den Ringen wenigstens zwei Reihen von zwischen diesen Ringen abrollenden Wälzkörpern mit jeweils zu einer definierten Rotationsachse symmetrischer, insbesondere zylinderrollen-, kegelrollen-, nadel- oder tonnenförmigen Gestalt vorgesehen sind, und wobei die Rotationsachsen der Wälzkörper einer ersten Reihe (etwa) radial bezüglich der Ringdrehachse verlaufen, während die Rotationsachsen der Wälzkörper einer zweiten Reihe (etwa) parallel zu der Ringdrehachse verlaufen.

Rollenlager haben den Vorteil einer linienförmigen Berührung jedes Wälzkörpers mit jeder Führungsbahn gegenüber der nur etwa punktförmigen Berührung bei Kugellagern. Aufgrund der größeren Berührungsflächen können mit rollenförmigen Wälzkörpern weitaus größere Kräfte übertragen werden als mit kugelförmigen Wälzkörpern. Ein Nachteil liegt jedoch darin, dass mit rollenförmigen Wälzkörpern nur Kräfte lotrecht zu ihrer Mantelfläche übertragen werden können. Reine Rollenlager sind daher entweder Radiallager oder Axiallager. Man hat bereits versucht, eine gewisse Führung in Richtung der Rotationsachse der Wälzkörper zu erreichen, indem man die Lauffläche(n) muldenförmig, insbesondere nutförmig ausgestaltete. Die Reibung der Rollenstirnseiten entlang dieser Nutflanken ist jedoch keine Rollreibung, sondern eine Gleitreibung, und bringt daher nicht nur einen vergleichsweise großen Energieverlust mit sich, sondern darüber hinaus auch einen großen Verschleiß. Schließlich läßt sich das Spiel nur ungenügend einstellen - entweder können die Rollen zwischen den zu groß dimensionierten Nutflanken hin und her wandern, oder sie zwängen zwischen den zu gering beabstandeten Nutflanken.

Will man daher auf die Vorteile von Rollenlagern nicht verzichten, ist man in vielen Anwendungsfällen gezwungen, zwei getrennt hergestellte Lager - ein Radiallager und ein Axiallager - miteinander zu kombinieren, um Kräfte in verschiedenen Richtungen übertragen zu können. Dies bringt jedoch teilweise komplizierte Anschluß- und Einstellarbeiten mit sich, um die dann insgesamt vier Ringe mit den verschiedenen Maschinenbauteilen zu verbinden und dennoch die von den Wälzlagern erwartete Leichtgängigkeit sicherzustellen. Dabei erweist es sich gerade bei Großwälzlagern mit einem Durchmesser von 1000 mm aufwärts als erschwerend, die Verdrehachsen der beiden Lager in eine exakte Flucht zu bringen. Gelingt dies nicht, so finden die umlaufenden Wälzkörper keine gleichmäßige Lauffläche vor und unterliegen einem erhöhten Verschleiß.

Die FR2387373 A1 offenbart eine Wälzlageranordnung für eine Drehverbindung, mit zwei konzentrisch zueinander sowie zumindest bereichsweise ineinander angeordneten Ringen, umfassend je eine Anschlussfläche zum Anschluss an je ein Fahrzeug-, Maschinen- oder Anlagenteil oder Fundament sowie jeweils Anschlusselemente in Form von Befestigungs- oder Sacklochbohrungen, ferner mit einem Spalt zwischen diesen Ringen, so dass sie um eine gedachte, zur Ringebene etwa lotrechte Achse im Zentrum der Ringe gegeneinander verdrehbar sind, wobei im Bereich des Spaltes zwischen den Ringen eine Reihe von Wälzkörpern mit jeweils zu einer definierten Rotationsachse symmetrischer sowie zylinderrollenförmigen Gestalt vorgesehen sind, und wobei die Rotationsachsen der Wälzkörper dieser Reihe überwiegend radial bezüglich der Ringdrehachse verlaufen, wobei in dem Spalt zwischen den beiden Ringen zusätzlich eine Reihe von kugelförmigen Wälzkörpern vorgesehen ist, wobei ein Ring einen etwa L-förmigen Querschnitt aufweist ähnlich einem kurzen Rohr- oder Muffenstück als rohrförmigem Abschnitt mit stirnseitig angesetztem Ringflansch oder -bund, wobei der Spalt einen L-förmigen Querschnitt aufweist, wobei in dem querschnittlich ausgesparten Bereich zwischen den beiden L-Schenkeln des Rings mit L-förmigem Querschnitt der andere Ring teilweise Platz findet und dabei die innerhalb des Spaltes eingelegten Wälzkörper an Ort und Stelle festhält, wobei die Reihe kugelförmiger Wälzkörper im Spaltquerschnitt im Bereich des rohrförmigen Ringabschnitts angeordnet ist, und wobei die Laufbahnen jedes Ringes für die Reihe von rollen- bzw. förmigen Wälzkörpern sowie für die Reihe von kugelförmigen Wälzkörpern an je einem einzigen, gemeinsamen, ungeteilten Rotationskörper ausgebildet sind.

Aus diesen Nachteilen des beschriebenen Standes der Technik resultiert das die Erfindung initiierende Problem, eine gattungsgemäße Wälzlageranordnung derart weiterzubilden, dass die Übertragung von großen Kräften sowohl in radialer als auch in axialer Richtung möglich ist, wobei axiale Kräfte in beiden axialen Richtungen aufzunehmen sind, damit Kippkräfte aufgefangen werden können. Dabei wäre es wünschenswert, wenn der Einbau nicht komplizierter wäre als bei einem vergleichbaren Kugellager und wenn außerdem der Verschleiß so gering wäre als möglich.

Die Lösung dieses Problems gelingt durch eine Wälzlageranordnung gemäß Anspruch 1.

Somit werden zwei Reihen von rollenförmigen Wälzkörpern, deren Rotationsachsen unterschiedlich orientiert sind, so dass eine Wälzkörperreihe radiale und die andere axiale Kräfte übertragen kann, mit einer Reihe von kugelförmigen Wälzkörpern integriert. Durch die Integration entfällt beim Einbau das Justieren der Drehachsen in einer gemeinsamen Flucht. Mit dem Begriff "etwa radial" ist dabei mindestens gemeint "überwiegend radial" im Sinne von "der Winkel zwischen der Rotationsachse eines Wälzkörpers und der Ringdrehachse ist größer als 50°", vorzugsweise jedoch sogar "nahezu radial" im Sinne von "der Winkel zwischen der Rotationsachse eines Wälzkörpers und der Ringdrehachse ist größer als 85°"; und mit dem Begriff "etwa parallel" ist mindestens gemeint "überwiegend parallel" im Sinne von "der Winkel zwischen der Rotationsachse eines Wälzkörpers und der Ringdrehachse ist kleiner als 40°", vorzugsweise jedoch sogar "nahezu parallel" im Sinne von "der Winkel zwischen der Rotationsachse eines Wälzkörpers und der Ringdrehachse ist kleiner als 5°, oder es gibt tatsächlich keinen Schnittpunkt (ideale Parallelität)". Die zusätzliche Kugelreihe hat die Aufgabe, axiale Zugkräfte zwischen den beiden Ringen entgegen der von den axial belastbaren Rollen übertragbaren Axialdruckkraft zu übernehmen, so dass bspw. horizontal eingebaute Wälzlager, deren axiale Belastung überwiegend vertikal nach unten weist, auch Kippmomente aufnehmen kann, wobei ein Teil des Wälzlagers nach oben zu kippen droht.

Es liegt im Rahmen der Erfindung, dass die Laufbahnen der beiden Ringe für die kugelförmigen Wälzkörper in axialer Richtung derart gegeneinander versetzt sind, dass sich ein Tragwinkel von mehr als 0° ergibt, bspw. von mehr als 15°, insbesondere von mehr als 30°. Dabei ergibt sich dieser Versatz aus der unterschiedlichen Höhe der betreffenden Laufbahnmittelpunkte in Bezug auf eine Laufbahn des Axialkräfte aufnehmenden Rollenlagers, wobei in dem dabei angenommenen Idealfall die beiden Ringe in axialer Richtung maximal angenähert sind entsprechend dem Durchmesser der Rollen dieses axialen Rollenlagers. Dabei neigt sich die Linie zwischen den beiden Berührungspunkten oder -bereichen einer Kugel mit den beiden Kugellaufbahnen zu den Rollenlaufbahnen des axiale Druckkräfte übertragenden Rollenlagers hin. An einem Ring, der die untere Laufbahn des axialen Rollenlagers aufweist, wandert der Berührungspunkt oder -bereich der Kugeln mit de Kugellaufbahn nach oben; an dem anderen Ring, der die obere Laufbahn des axialen Rollenlagers trägt, dagegen nach unten. Der betreffende Neigungswinkel gegenüber der Lagerebene, eben der Tragwinkel, ist bevorzugt kleiner als 60° und liegt zumeist bei etwa 45° .

Es hat sich als günstig erwiesen, dass die Wälzkörper, deren Rotationsachsen (etwa) parallel zu der Ringdrehachse verlaufen, in einer Ebene liegen, welche von der Ringdrehachse etwa lotrecht durchstoßen wird, entsprechend einem einreihigen Radiallager.

Darüber hinaus empfiehlt die Erfindung, die Anordnung so zu treffen, dass die Ebene der Wälzkörper mit zu der Ringdrehachse (etwa) parallelen Rotationsachsen die dem gemeinsamen Spalt zugewandte Oberfläche jedes Ringes in zwei Abschnitte teilt, von denen nur einer Führungsbahn(en) für Wälzkörper mit (etwa) radial bezüglich der Ringdrehachse verlaufenden Rotationsachsen aufweist. Eine solche Anordnung erleichtert den Zusammenbau eines erfindungsgemäßen Wälzlagers.

Dem selben Zweck dient eine Konstruktionsvorschrift, wonach jeder Ring nur einer einzigen Anschlußfläche zugewandte Führungsbahn(en) für Wälzkörper mit radial bezüglich der Ringdrehachse verlaufenden Rotationsachsen aufweist. Daher lassen sich die Ringe mit dazwischen eingelegten Wälzkörpern bequem in axialer Richtung zusammenfügen.

Besonders bevorzugt wird eine Anordnung, wobei sämtliche Wälzkörper mit radial bezüglich der Ringdrehachse verlaufenden Rotationsachsen in einer einzigen, gemeinsamen Ebene liegen. Dadurch ergibt sich eine besonders einfache Querschnittsgeometrie der Ringe.

Die Erfindung läßt sich dahingehend weiterbilden, dass eine Reihe von Wälzkörpern, deren Rotationsachsen radial bezüglich der Ringdrehachse verlaufen, durch quer zu ihrer Längsrichtung geteilte Rollen gebildet ist. Solchenfalls können die weiter außen umlaufenden Rollen sich mit einer anderen Rotationsgeschwindigkeit drehen als die weiter innen umlaufenden Rollen, so dass trotz einer insgesamt sehr großen Berührungsfläche zwischen Wälzkörper und Ringen kaum verschleißende Gleitreibung anzutreffen ist, sondern nur verschleißarme Rollreibung.

Indem sämtliche Wälzkörper mit jeweils zu einer definierten Rotationsachse symmetrischer, insbesondere zylinderrollen-, kegelrollen-, nadel- oder tonnenförmigen Gestalt, ggf. mit bombierten Stirnseiten bzw. -kanten, unabhängig von der Ausrichtung ihrer Rotationsachse nahezu gleiche Durchmesser aufweisen, können sie aus demselben stangenförmigem Rohmaterial hergestellt werden, was nicht nur ihre Herstellung, sondern auch ihren Einbau erleichtert; sie haben dann sogar identische Durchmesser. Der Begriff "identischer Durchmesser" ist dabei derart zu verstehen, dass die Abweichung von einem vorgegebenen Durchmesser (Streuung) jeweils kleiner ist als ein vorgegebener Wert, beispielsweise kleiner als 10 µm, vorzugsweise kleiner als 6 µm, insbesondere kleiner als 2 µm. Solches kann durch Sortieren erreicht werden. Unterschiedliche Belastungen in axialer bzw. radialer Richtung können entweder durch unterschiedlich lange Rollen berücksichtigt werden oder durch stirnseitiges Aneinanderreihen einer entsprechenden Anzahl von gleichen Rollen, ggf. bei Betrieb in einem gemeinsamen Käfig. Allerdings können auch Rollen mit unterschiedlichen Querschnitten verwendet werden.

Bevorzugt befinden sich sämtliche Wälzkörper mit jeweils zu einer definierten Rotationsachse symmetrischer, sowie rollen- oder tonnenförmigen Gestalt in genau zwei zueinander parallelen Ebenen, nämlich in einer Ebene die Wälzkörper mit (etwa) radialer Rotationsachse, und in einer anderen, dazu parallelen, aber in axialer Richtung entlang der Ringdrehachse demgegenüber versetzten Ebene die Wälzkörper mit (etwa) axialer Rotationsachse. Somit bleibt die Bauhöhe des erfindungsgemäßen Wälzlagers minimal, was in manchen Anwendungsfällen vorteilhaft ist.

Indem erfindungsgemäß die Führungsbahnen jedes Ringes für alle Wälzkörper an je einem einzigen, gemeinsamen, ungeteilten Rotationskörper ausgebildet sind, läßt sich der Herstellungsaufwand weiter minimieren, da insgesamt nur zwei Ringteile zusammenzubauen sind und nicht drei, wie dies bei einem geteilten Ring erforderlich wäre.

Die Erfindung empfiehlt, wenigstens eine Führungsbahn für eine Reihe von rollen-oder tonnenförmigen Wälzkörpern, deren Rotationsachsen achsparallel bezüglich der Ringdrehachse verlaufen, als etwa rundumlaufende Nut mit etwa rechteckigem Querschnitt auszubilden. In dieser Nut werden die darin aufgenommenen Wälzkörper während des Betriebs, aber auch bereits während des Zusammenbaus, in axialer Richtung geführt.

Wenn die nutförmige Führungsbahn an dem Außenmantel des radial innen liegenden Rings gebildet ist, läßt sie sich mit den Wälzkörpern, die vorzugsweise einzeln einzusetzen sind, leichter bestücken als ggf. eine an dem Innenmantel eines Ringes vorgesehene Nut.

Gemäß der Erfindung, weist der Spalt zwischen den beiden Ringen einen etwa L-förmigen Querschnitt auf. Jedem der beiden Schenkel eines solchen L-förmigen Querschnitts ist dabei wenigstens eine Reihe von Wälzkörpern mit entsprechend orientierten Rotationsachsen zugeordnet.

Zur Erzeugung einer solchen L-förmigen Spaltgeometrie weist erfindungsgemäß ein Ring, vorzugsweise der radial innen liegende Ring, einen etwa L-förmigen Querschnitt auf, ähnlich einem kurzen Rohr- oder Muffenstück mit stirnseitig angesetztem Ringflansch oder -bund. Der andere Ring findet teilweise in dem querschnittlich ausgesparten Bereich zwischen den beiden L-Schenkeln Platz und hält dabei die innerhalb des Spaltes eingelegten Wälzkörper an Ort und Stelle fest.

Besondere Vorteile lassen sich dadurch erzielen, dass sich erfindungsgemäß wenigstens eine Reihe von rollen- oder tonnenförmigen Wälzkörpern, deren Rotationsachsen achsparallel bezüglich der Ringdrehachse verlaufen, in einem Abschnitt des Spaltes befindet zwischen der Reihe von rollen- oder tonnenförmigen Wälzkörpern, deren Rotationsachsen achsparallel bezüglich der Ringdrehachse verlaufen, einerseits und der zusätzlichen Reihe von kugelförmigen Wälzkörpern andererseits. Denn solchenfalls ist der axiale Abstand zwischen den beiden Ebenen rollen- oder tonnenförmiger Wälzkörper minimal, so dass diese sich gegenseitig stützen und nachteilige Verkantungen der beteiligten Ringe nahezu ausgeschlossen sind.

Im Bereich wenigstens einer Reihe von Wälzkörpern, vorzugsweise im Bereich aller Wälzkörperreihen, können je ein Käfig und/oder Distanzelemente vorgesehen sein, um die Wälzkörper in gleichmäßigen Abständen zu führen und eine gleichmäßige Belastungsfähigkeit sicherzustellen.

Die Anschlußelemente im Bereich eines Ringes sollten als Sacklochbohrungen ausgebildet sein, so dass sie nicht mit dem anderen - querschnittlich L-förmigen - Ring in Konflikt geraten.

In diesem Fall darf die Richtung der Längsachsen der Sacklochbohrungen die Laufbahn für wenigstens eine Reihe von rollen- oder tonnenförmigen Wälzkörpern, deren Rotationsachsen radial bezüglich der Ringdrehachse verlaufen, schneiden oder zumindest tangieren. Dadurch wird der radiale Platzbedarf des erfindungsgemäßen Wälzlagers weiter reduziert.

Schließlich entspricht es der Lehre der Erfindung, dass an einem Ring eine umlaufende Verzahnung vorgesehen ist, vorzugsweise an dem radial außen liegenden Ring, insbesondere an dessen außen liegender Mantelfläche, so dass eine definierte Relativverdrehung, bspw. über eine in diese Verzahnung eingreifende, motorisch angetriebene Schnecke oder Ritzel möglich ist.

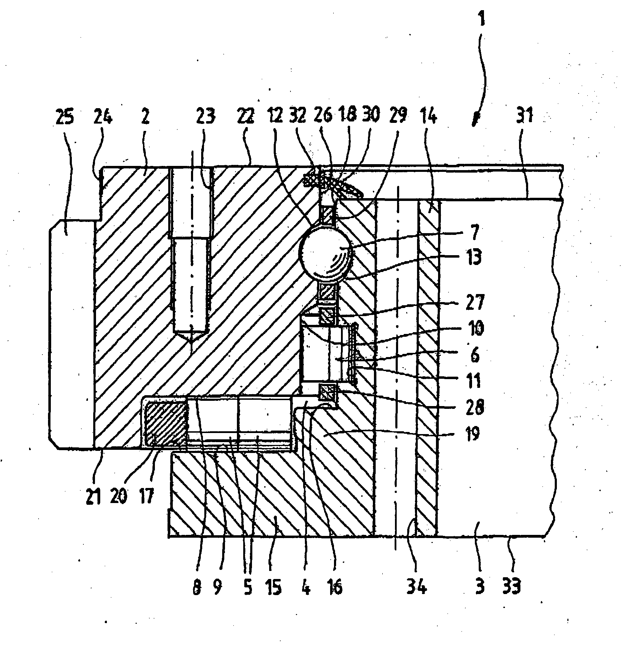

Weitere Merkmale, Einzelheiten, Vorteile und Wirkungen auf der Basis der Erfindung ergeben sich aus der nachfolgenden Beschreibung einer bevorzugten Ausführungsform der Erfindung sowie anhand der Zeichnung. Deren einzige Figur zeigt einen Schnitt durch eine erfindungsgemäße Wälzlageranordnung entlang einer radialen, zur Ringdrehachse parallelen Ebene.

Die erfindungsgemäße Wälzlageranordnung 1 aus der Zeichnung besteht aus zwei konzentrisch zueinander sowie zumindest bereichsweise ineinander angeordneten Ringen 2, 3 mit einem Spalt 4 zwischen diesen Ringen 2, 3, so dass sie um eine gedachte, zur Ringebene etwa lotrechte Achse im Zentrum der Ringe 2, 3 gegeneinander verdrehbar sind.

Im Bereich des Spaltes 4 zwischen den Ringen 2, 3 befinden sich mehrere Reihen von Wälzkörpern 5, 6, 7, die an einander jeweils gegenüberliegenden Laufbahnen 8, 9, 10, 11, 12, 13 der beiden Ringe 2, 3 abrollen und damit deren leichtgängige Relativverdrehung gewährleisten.

Der radial weiter außen liegende Ring 2 hat in dem dargestellten Beispiel eine Grundgestalt mit einem etwa quadratischen Querschnitt, aus dem jedoch die Laufbahnen 8, 10, 12 für die Wälzkörper 5, 6, 7 herausgearbeitet sind.

Der radial weiter innen liegende Ring 3 hat dagegen einen etwa L-förmigen Querschnitt, aus welchem die Laufbahnen 9, 11, 13 für die Wälzkörper 5, 6, 7 herausgearbeitet sind. Der in der Figur vertikal verlaufende, zur Rotationsachse dieses Ringes 3 parallele Querschnittsschenkel 14 repräsentiert dabei einen Ringabschnitt mit einer Geometrie ähnlich einem sehr kurzen Rohr 14, während der horizontal verlaufende Querschnittsschenkel 15 einen an einer Stirnseite dieses Rohrs 14 nach Art eines rundumlaufenden Bundes, Flansches oder einer Krempe außen angesetzten Kreisscheibenring 15 repräsentiert. Zwischen dem rohrförmigen Abschnitt 14 und dem krempenartigen Abschnitt 15 verbleibt eine Auskehlung 16, in welche der andere, radial weiter außen liegende Ring 2 teilweise eingreift. Gleichzeitig beranden die diese Auskehlung 16 begrenzenden Flächen 17, 18 den Spalt 4 und beherbergen die Laufbahnen 9, 11, 13 für die Wälzkörper 5, 6, 7. Zwischen den beiden Flächen 17, 18 befindet sich eine rundumlaufende Abstufung 19, so dass die beiden Fläche 17, 18 nicht direkt aneinandergrenzen, sondern durch diese Abstufung 19 voneinander abgetrennt werden. Die Höhe und Breite dieser Abstufung 19 ist etwas kleiner als der Durchmesser eines Wälzkörpers 5, 6, 7 und füllt den Spalt 4 im Bereich des L-Knickes teilweise, so dass das Spaltvolumen minimal ist.

Bei dem dargestellten Ausführungsbeispiel bildet die gesamte Fläche 17 die Laufbahn 9 für rollenförmige Wälzkörper 5, deren Rotationsachse radial bezüglich der nicht dargestellten Ringdrehachse orientiert sind. Vorzugsweise haben diese Wälzkörper 5 eine zylindrische Gestalt (Zylinderrollen); sie könnte jedoch auch leicht kegelstumpfförmig gestaltet sein (Kegelrollen), entsprechend dem unterschiedlichen Laufbahnumfang am Innen- und am Außendurchmesser der Laufbahn 9. Bei dem dargestellten Beispiel werden jedoch zylindrische Rollen 5 verwendet, welche statt dessen quer zu ihrer Längsrichtung unterteilt sind in eine innere Rolle und eine äußere Rolle, welche sich mit unterschiedlicher Geschwindigkeit drehen können. Sie werden jedoch gemeinsam auf äquidistanten Abständen gehalten durch einen Käfig 20, der nur einseitig, nämlich an dem radial außen liegenden Rand, zu einem Ring geschlossen ist. Die Laufbahn 8 des äußeren Rings 2 für diese Wälzkörper 5 und den Käfig 20 ist als rundumlaufende Auskehlung an der dem Spalt 4 zugewandten Stirnseite 21 dieses Ringes 2 ausgebildet, in welche die Wälzkörper 5 und der Käfig 20 fast vollständig eintauchen.

An der dieser mit der Laufbahn 1 Auskehlung 8 versehenen Stirnseite 21 gegenüberliegenden Stirnseite 22 des Ringes 2 befinden sich kranzförmig verteilt Sacklochbohrungen 23 mit Innengewinde zum Anschluß dieses Ringes 2 an einem Maschinenteil oder Fundament.

An der radial außen liegenden Seite 24 dieses Ringes 2 ist eine rundumlaufende Verzahnung 25 vorgesehen, welche sich über nahezu die gesamte Höhe des Ringes 2 erstrecken kann, vorzugsweise jedoch nicht ganz bis zu dessen Anschlußfläche 22.

Die konkave bzw. radial innen liegenden Seite 26 dieses Ringes 2 ist dem Spalt 4 zugekehrt. An ihrem unteren Ende befindet sich eine rechteckige oder - im vorliegenden Beispiel - trapezförmige Vertiefung bzw. Auskehlung als Laufbahn 10 für eine Reihe von zylinderrollenförmigen Wälzkörpern 6 mit zu der Ringdrehachse paralleler Rotationsachse. Die Laufbahn 11 in der gegenüberliegenden Fläche 18 des innen liegenden Ringes 3 hat die Gestalt einer Nut mit rechteckigem Querschnitt. Die Wälzkörper 6 dieser Reihe werden von einem weiteren Käfig 27 auf äquidistanten Abständen gehalten, Der in Richtung der Ringdrehachse gemessene Abstand der nutförmigen Laufbahn 11 zu der kreisringförmigen Laufbahn 9 ist etwas (geringfügig) größer als die Höhe der Abstufung 19 zzgl. ggf. eines randseitig umlaufenden Ringes 28 des Käfigs 27.

Die zylinderrollenförmigen Wälzkörper 5, 6 mit - bezüglich der Ringdrehachse - radial orientierter Rotationsachse und mit demgegenüber axial orientierter Rotationsachse haben vorzugsweise gleiche oder zumindest nahezu gleiche Durchmesser (± 10%) und vorzugsweise gleiche oder zumindest nahezu gleiche Längen (± 10%), so dass die übertragbaren Kräfte eines Wälzkörpers 5 etwa gleich groß sind zu den von einem Wälzkörper 6 übertragbaren Kräften. Da von den Wälzkörpern 5 jeweils zwei hintereinander angeordnet sind, ist in dem vorliegenden Beispiel die von der Wälzlageranordnung 1 in axialer Richtung übertragbare Druckkraft mindestens etwa doppelt so hoch wie die in radialer Richtung übertragbare Kraft. Durch die Verwendung identischer Rollen 5, 6 für die Reihen mit radialer und mit axiale Rotationsachsenausrichtung kann die Herstellung eines erfindungsgemäßen Wälzlagers 1 weiter vereinfacht werden.

Um außerdem auch Kräfte in axialer Zugrichtung übertragen zu können, dient eine zusätzliche Reihe von kugelförmigen Wälzkörpern 7. Diese befindet sich innerhalb des Spaltes 4 jenseits der beiden Reihen mit rollenförmigen Wälzkörpern 5, 6, im Bereich des rohrförmigen Ringabschnittes 14 bzw. der diesen im Bereich des Spaltes 4 berandenden Mantelfläche 18. Der Durchmesser einer Kugel 7 entspricht etwa dem Durchmesser einer Rolle 5, 6. Die Laufbahnen 12, 13 in den beiden Ringen 2, 3 für die kugelförmigen Wälzkörper 7 haben jeweils etwa gleichen Querschnitt, nämlich den eines Kreissegmentes mit einem geringfügig größeren Radius als die Kugeln 7 selber. Indem diese beiden Laufbahnen 12, 13 in dem zusammengebauten Zustand des Wälzlagers 1 gemäß der Zeichnung leicht gegeneinander versetzt sind - die Laufbahn 13 in dem Ring 3 mit L-förmigem Querschnitt ist dem radial bezüglich der Ringdrehachse orientierten Abschnitt des Spaltes 4 geringfügig näher als die gegenüberliegende Laufbahn 12 an dem anderen Ring 2 - wird eine axiale Druckkraft zwischen den beiden Ringen 2, 3 erzeugt, welche diese fest gegen die radial orientierten Rollen 5 preßt. Ein eigener Käfig 29 hält die Kugeln 7 auf äquidistanten Abständen.

Jenseits der Reihe mit kugelförmigen Wälzkörpern 7 ist der Spalt 4 mit einer Dichtung 30 verschlossen. Da die hier an den Spalt 4 angrenzende Stirnseite 31 des inneren bzw. querschnittlich L-förmigen Ringes 3 gegenüber der Anschlußfläche 22 des äußeren Ringes 2 um ein geringes Maß von einigen Millimetern zurückversetzt ist, läßt sich diese Dichtung 30 als elastischer Dichtungsring realisieren, der an in einer rundumlaufenden Nut 32 in der Innenseite 26 des äußeren Ringes 2 eingesetzt und verankert ist und mit wenigstens einer Dichtlippe - im vorliegenden Beispiel mit zwei Dichtlippen - gegen die Stirnseite 31 des inneren bzw. querschnittlich L-förmigen Ringes 3 gepreßt wird. Am anderen Ende des Spaltes 4 könnte auch eine Dichtung vorgesehen sein, was jedoch nicht zwingend erforderlich ist

Die der Stirnseite 31 gegenüberliegende, den krempenförmigen Ringabschnitt 15 außen begrenzende Stirnseite 33 des radial innenliegenden, querschnittlich L-förmigen Rings 3 dient als dessen Anschlußfläche zu einem Fahrzeug- Maschinen- oder Anlagenteil oder Fundament. Diese Anschlußfläche 33 wird von mehreren Befestigungsbohrungen 34 durchsetzt. Diese Befestigungsbohrungen 34 sind über den Umfang des Ringes 3 gleichmäßig verteilt, verlaufen lotrecht zu der Anschlußfläche 33 und erstrecken sich durch den rohrförmigen Ringabschnitt 14 durchgehend bis zu der gegenüberliegenden Stirnseite 31, so dass durch diese Bohrungen 34 Maschinenschrauben hindurchgesteckt werden können.

## Patentansprüche

1. Wälzlageranordnung (1) für eine Drehverbindung, mit zwei konzentrisch zueinander sowie zumindest bereichsweise ineinander angeordneten Ringen (2,3), umfassend je eine Anschlussfläche (22,33) zum Anschluss an je ein Fahrzeug-, Maschinen- oder Anlagenteil oder Fundament sowie jeweils Anschlusselemente in Form von Befestigungs- oder Sacklochbohrungen (23,34), ferner mit einem Spalt (4) zwischen diesen Ringen (2,3), so dass sie um eine gedachte, zur Ringebene etwa lotrechte Achse im Zentrum der Ringe (2,3) gegeneinander verdrehbar sind, wobei im Bereich des Spaltes (4) zwischen den Ringen (2,3) wenigstens zwei Reihen von Wälzkörpern(5,6) mit jeweils zu einer definierten Rotationsachse symmetrischer sowie zylinderrollen-, kegelrollen-, nadel- oder tonnenförmiger Gestalt vorgesehen sind, und wobei die Rotationsachsen der Wälzkörper (5) einer ersten Reihe überwiegend radial bezüglich der Ringdrehachse verlaufen, während die Rotationsachsen der Wälzkörper (6) einer zweiten Reihe überwiegend parallel zu der Ringdrehachse verlaufen, wobei in dem Spalt (4) zwischen den beiden Ringen (2,3) zusätzlich eine Reihe von kugelförmigen Wälzkörpern (7) vorgesehen ist, wobei ein Ring (2,3) einen etwa L-förmigen Querschnitt aufweist mit einem als kurzes Rohr- oder Muffenstück gestalteten rohrförmigen Abschnitt (14) sowie mit einen Stirnseitig angesetzten Ringflansch oder -bund (15), wobei
a) der Spalt (4) einen L-förmigen Querschnitt aufweist, wobei
b) in dem querschnittlich ausgesparten Bereich zwischen den beiden L-Schenkeln des Rings (2,3) mit L-förmigem Querschnitt der andere Ring (3,4) teilweise Platz findet und dabei die innerhalb des Spaltes (4) eingelegten Wälzkörper (6) an Ort und Stelle festhält,
c) wobei die Reihe kugelförmiger Wälzkörper (7) im Spaltquerschnitt im Bereich des rohrförmigen Ringabschnitts (14) jenseits der wenigstens zwei Reihen rollenförmiger Wälzkörper (5,6) angeordnet ist,
d) und wobei die Laufbahnen (8-13) jedes Ringes (2,3) für die wenigstens zwei Reihen von Zylinderrollen-, Regelralen-, nadel- oder tonnenförmigen Wälzkörpern (5,6) sowie für die Reihe von kugelförmigen Wälzkörpern (7) an je einem einzigen, gemeinsamen, ungeteilten Rotationskörper (2,3) ausgebildet sind.

2. Wälzlageranordnung nach Anspruch 1, **dadurch gekennzeichnet, dass** die Laufbahnen der beiden Ringe (2,3) für die kugelförmigen Wälzkörper (7) in axialer Richtung derart gegeneinander versetzt sind, dass sich ein Tragwinkel größer 0° ergibt, bspw. ein Tragwinkel von mehr als 15°, insbesondere von mehr als 30°.

3. Wälzlageranordnung nach Anspruch 1 oder 2, **dadurch gekennzeichnet, dass** die Wälzkörper (6), deren Rotationsachsen überwiegend parallel zu der Ringdrehachse verlaufen, in einer Ebene liegen, welche von der Ringdrehachse etwa lotrecht durchstoßen wird.

4. Wälzlageranordnung nach Anspruch 3, **dadurch gekennzeichnet, dass** die Ebene der Wälzkörper (6) mit zu der Ringdrehachse überwiegend parallelen Rotationsachsen die dem gemeinsamen Spalt (4) zugewandte Oberfläche (17,18,21,26) jedes Ringes (2,3) in zwei Abschnitte teilt, von denen nur jeweils einer (17,21) Laufbahn(en) (8,9) für Wälzkörper (5) mit überwiegend radial bezüglich der Ringdrehachse verlaufenden Rotationsachsen aufweist.

5. Wälzlageranordnung nach einem der vorhergehenden Ansprüche, **dadurch gekennzeichnet, dass** (alle) Laufbahn(en) (8,9) für Wälzkörper (6) mit radial bezüglich der Ringdrehachse verlaufenden Rotationsachsen an jedem Ring (2,3) nur einer einzigen Stirnseite zugewandt sind, vorzugsweise der der betreffenden (in bezüglich der Ringdrehachse axialer Richtung überstehenden) Anschlussfläche (22,33) gegenüberliegenden Stirnseite (21,31).

6. Wälzlageranordnung nach einem der vorhergehenden Ansprüche, **dadurch gekennzeichnet, dass** sämtliche Wälzkörper (5) mit radial bezüglich der Ringdrehachse verlaufenden Rotationsachsen in einer einzigen, gemeinsamen Ebene liegen.

7. Wälzlageranordnung nach einem der vorhergehenden Ansprüche, **dadurch gekennzeichnet, dass** eine Reihe von Wälzkörpern (5), deren Rotationsachsen radial bezüglich der Ringdrehachse verlaufen, durch quer zu ihrer Längsrichtung geteilte Rollen gebildet ist.

8. Wälzlageranordnung nach einem der vorhergehenden Ansprüche, **dadurch gekennzeichnet, dass** sämtliche Wälzkörper (5,6) mit jeweils zu einer definierten Rotationsachse symmetrischer, insbesondere zylinderrollen-, kegelrollen-, nadel- oder tonnenförmigen Gestalt unabhängig von der Ausrichtung ihrer Rotationsachse nahezu gleiche Durchmesser aufweisen, d.h., mit einer Abweichung von weniger als ± 10%, insbesondere mit einer Abweichung von weniger als ± 5%, insbesondere mit einer Abweichung von weniger als ± 2%.

9. Wälzlageranordnung nach einem der vorhergehenden Ansprüche, **dadurch gekennzeichnet, dass** sich sämtliche Wälzkörper (5,6) mit jeweils zu einer definierten Rotationsachsen symmetrischer, sowie rollen- oder tonnenförmiger Gestalt in genau zwei zueinander parallelen Ebenen befinden.

10. Wälzlageranordnung nach einem der vorhergehenden Ansprüche, **dadurch gekennzeichnet, dass** wenigstens eine Laufbahn (10,11) für eine Reihe von Wälzkörpern (6) mit jeweils zu einer definierten Rotationsachse symmetrischer, sowie zylinderrollen-, kegelrollen-, nadel- oder tonnenförmiger Gestalt, deren Rotationsachsen achsparallel bezüglich der Ringdrehachse verlaufen, durch eine rundumlaufende Nut (11) mit geraden, vorzugsweise zueinander parallelen Seitenflanken und insbesondere mit einem etwa rechteckigen Querschnitt gebildet ist.

11. Wälzlageranordnung nach Anspruch 10, **dadurch gekennzeichnet, dass** die nutförmige Laufbahn (11) an einer konvex gewölbten Mantelfläche (18) des radial innen liegenden Rings (3) gebildet ist.

12. Wälzlageranordnung nach einem der vorhergehenden Ansprüche, **dadurch gekennzeichnet, dass** der radial innen liegende Ring (3) den etwa L-förmigen Querschnitt aufweist.

13. Wälzlageranordnung nach einem der vorhergehenden Ansprüche, **dadurch gekennzeichnet, dass** im Bereich wenigstens einer Reihe von Wälzkörpern (5-7), vorzugsweise im Bereich aller Wälzkörperreihen (5-7), je ein Käfig (20.27,29) und/oder Distanzelemente vorgesehen sind.

14. Wälzlageranordnung nach einem der vorhergehenden Ansprüche, **dadurch gekennzeichnet, dass** die Wälzkörper (5,6) mit jeweils zu einer definierten Rotationsachse symmetrischer, sowie zylinderrollen-, kegelrollen-, nadel- oder tonnenförmiger Gestalt bombierte Stirnseiten oder Stirnkanten aufweisen.

15. Wälzlageranordnung nacheinem der vorhergehenden Ansprüche, **dadurch gekennzeichnet, dass** die Richtung der Längsachsen der Sacklochbohrungen (23) die Laufbahn (8) des betreffenden Rings (2) für wenigstens eine Reihe von Wälzkörpern (5) mit jeweils zu einer definierten Rotationsachse symmetrischer, sowie zylinderrollen-, kegelrollen-, nadel- oder tonnenförmiger Gestalt, deren Rotationsachsen radial bezüglich der Ringdrehachse verlaufen, schneidet oder zumindest tangiert.

16. Wälzlageranordnung nach einem der vorhergehenden Ansprüche, **dadurch gekennzeichnet, dass** an einem Ring (2,3) eine umlaufende Verzahnung (25) vorgesehen ist; vorzugsweise an dem radial außen liegenden Ring (2), insbesondere an einer konvex gekrümmten Mantelfläche (24) desselben.

## Claims

1. Roller bearing arrangement (1), particularly for a rotary connection, comprising two rings (2,3) arranged mutually concentrically and at least regionally inside each other, each provided with a connecting surface (22,23) for the connection to a part of a car, of a machine or of an installation, or to a foundation, as well as connecting elements in the form of fastening bores or blind hole bores (23,24), and comprising a gap (4) between said rings (2,3), so that they are rotatable relative to each other about an imaginary axis at the center of said rings (2,3) and approximately perpendicular to the ring plane, wherein at least two rows of rolling elements (5,6) symmetrical to a defined axis of rotation and of a shape of a cylinder, a cone, a needle or a barrel, are provided in the region of the gap (4) situated between said rings (2,3), and wherein the axes of rotation of the rolling elements (5) of a first row are mainly directed radially relative to the ring's axis of rotation, while the axes of rotation of the rolling elements (6) of a second row are directed parallel to the ring's axis of rotation, and wherein a row of ball-shaped rolling elements (7) is additionally provided in the gap (4) between the both rings (2,3), wherein a ring (2,3) has a nearly L-shaped cross-section with a tube-shaped section (14) in the form of a short pipe or sleeve as well as with an annular flange or collar (15), wherein
a) the gap (4) comprises an L-shaped cross-section, wherein
b) within the area of recessed cross-section between the two L-shaped legs of the ring (2,3) of L-shaped cross-section, the other ring (3,4) is received partially, and thereby keeps the rolling elements (6) inserted in the gap (4) on the spot,
c) wherein the row of ball-shaped rolling elements (7) within the gap cross-section is arranged in the area of the tube-shaped ring section (14) beyond the at least two rows of roller-shaped rolling elements (5,6),
d) and wherein the raceways (8-13) of each ring (2,3) for the at least two rows of rolling elements (5,6) with a shape of a cylinder, a cone, a needle or a barrel, as well as for the row of ball-shaped rolling elements (7) are formed at a single, common, unseparated rotational body (2,3).

2. Roller bearing arrangement according to claim 1, **characterized in that** the raceways of both rings (2, 3) for the ball-shaped rolling elements (7) are displaced with regard to each other in an axial direction, so that a support angle of more than 0° occurs, for example a support angle of more than 15°, especially of more than 30°.

3. Roller bearing arrangement according to claim 1 or 2, **characterized in that** the rolling elements (6), whose rotational axes are mainly parallel to the rotational axe of the ring, are situated within a plane, which is penetrated approximately perpendicularly by the rotational axis of the ring.

4. Roller bearing arrangement according to claim 3, **characterized in that** the plane of the rolling elements (6) with their rotational axes mainly parallel to the ring's rotational axe divides that surface (17,18,21,26) of each ring (2,3) facing the common gap (4) in two sections, only one (17,21) of which comprises raceway(s) (8,9) for rolling elements (5) with rotational axes mainly radially with regard to the rotational axis of the ring.

5. Roller bearing arrangement according to one of the preceding claims, **characterized in that** the (all) raceway(s) (8,9) of the rolling elements (6) with their rotational axes running radially with regard to the ring's rotational axis are directed towards only a single end face, preferably towards the end face (21,31) opposite the regarding connection surface (22,23) (which protrudes in an axial direction along the rotational axis of the ring).

6. Roller bearing arrangement according to one of the preceding claims, **characterized in that** all rolling elements (5) with their rotational axes running mainly radially with regard to the ring's rotational axis are situated within a single, common plane.

7. Roller bearing arrangement according to one of the preceding claims, **characterized in that** a row of rolling elements (5), whose rotational axes run mainly radially with regard to the ring's rotational axis, is formed by rollers, which are divided transversely to their longitudinal directions.

8. Roller bearing arrangement according to one of the preceding claims, **characterized in that** all rolling elements (5,6) with a shape symmetrical to a defined rotational axis, especially with a shape of a cylinder, or a cone, or a needle, or a barrel, have - independent from their alignments - nearly identical diameters, that means with a deviation of less than ± 10 %, especially with a deviation of less than ± 5 %, especially with a deviation of less than ± 2 %.

9. Roller bearing arrangement according to one of the preceding claims, **characterized in that** all rolling elements (5,6) with a shape symmetrical to a defined rotational axis, as well as with a shape of a roller or a barrel, are situated within exactly two planes parallel to each other.

10. Roller bearing arrangement according to one of the preceding claims, **characterized in that** at least one raceway (10,11) for a row of rolling elements (6) with a shape symmetrical to a defined rotational axis, as well as with a shape of a cylinder, or a cone, or a needle, or a barrel, whose rotational axes are parallel to the ring's rotational axis, are formed by a circumferential groove (11) with straight flanks, preferably with flanks parallel to each other, and especially by a circumferential groove with a rectangular cross-section.

11. Roller bearing arrangement according to claim 10, **characterized in that** the groove-shaped raceway (11) is formed at a convex curved lateral surface (18) of the radial inner ring (3).

12. Roller bearing arrangement according to one of the preceding claims, **characterized in that** the radial inner ring (3) comprises the L-shaped cross-section.

13. Roller bearing arrangement according to one of the preceding claims, **characterized in that** a cage (20,27,29) and/or spacers are provided in the area of at least one row of rolling elements (5-7), preferably in the area of all rows of rolling elements (5-7).

14. Roller bearing arrangement according to one of the preceding claims, **characterized in that** the rolling elements (5,6) with a shape symmetrical to a defined rotational axis, as well as with a shape of a cylinder or a cone or a needle or a barrel, comprise crowned end faces or end edges.

15. Roller bearing arrangement according to one of the preceding claims, **characterized in that** the direction of the longitudinal axes of the blind bores (23) intersects or at least touches the raceway (8) of the regarding ring (2) for at least one row of rolling elements (5) with a shape symmetrical to a defined rotational axis, as well as with a shape of a cylinder, or a cone, or a needle, or a barrel, whose rotational axes are radial to the ring's rotational axis.

16. Roller bearing arrangement according to one of the preceding claims, **characterized in that** a circumferential toothing (25) is provided at a ring (2,3), preferably at the radial outer ring (2), especially at a convex curved lateral surface (24) of the same.

## Revendications

1. Disposition de roulements (1) pour une liaison rotative, avec deux bagues (2, 3) disposées concentriquement l'une par rapport à l'autre ainsi qu'au moins en partie l'une dans l'autre, comprenant respectivement une face de raccordement (22, 33) pour le raccordement à respectivement une partie de véhicule, machine ou installation ou bâti ainsi que respectivement des éléments de raccordement sous forme de trous de fixation ou d'alésages borgnes (23, 34), avec en outre une fente (4) entre ces bagues (2, 3), de sorte qu'elles puissent tourner en opposition autour d'un axe imaginaire approximativement perpendiculaire au plan de bague au centre des bagues (2, 3) où, dans la zone de la fente (4) entre les bagues (2, 3), au moins deux rangées de corps de roulement (5, 6) sont prévues, ayant respectivement une forme symétrique ainsi qu'une forme de rouleau cylindrique, de rouleau conique, d'aiguille ou de barillet par rapport à un axe de rotation défini, et où les axes de rotation des corps de roulement (5) d'une première rangée s'étendent essentiellement radialement par rapport à l'axe de rotation de bague, tandis que les axes de rotation des corps de roulement (6) d'une seconde rangée sont essentiellement parallèles à l'axe de rotation de bague, une rangée supplémentaire de corps de roulement (7) sphériques étant prévue dans la fente (4) entre les deux bagues (2, 3), où une bague (2, 3) présente une section en forme de L avec un segment (14) tubulaire sous la forme d'une pièce de tube ou de manchon courte ainsi qu'une bride annulaire ou collerette (15) rapportée sur la face frontale,
a) la fente (4) présentant une section en L, où
b) l'autre bague (3, 4) tient partiellement dans la zone évidée en section entre les deux côtés L de la bague (2, 3) avec une section en L tout en retenant en place et en position les corps de roulement (6) introduits à l'intérieur de la fente (4),
c) la rangée de corps de roulement (7) sphériques dans la section de fente étant disposée dans la zone du segment de bague tubulaire (14) au-delà d'au moins deux rangées de corps de roulement (5, 6) en forme de rouleau,
d) et où les chemins de roulement (8-13) de chaque bague (2, 3) au moins pour les deux rangées de corps de roulement (5, 6) en forme de rouleau cylindrique, de rouleau conique, d'aiguille ou de barillet ainsi que pour la rangée de corps de roulement (7) sphériques sont réalisés sur respectivement un unique corps de rotation (2, 3) commun, en une seule pièce.

2. Disposition de roulements selon la revendication 1, **caractérisée en ce que** les chemins de roulement des deux bagues (2, 3) pour les corps de roulement sphériques (7) sont décalés mutuellement en sens axial de manière à obtenir une équerre supérieure à 0°, par exemple une équerre de plus de 15°, en particulier de plus de 30°.

3. Disposition de roulements selon la revendication 1 ou 2, **caractérisée en ce que** les corps de roulement (6) dont les axes de rotation sont essentiellement parallèles par rapport à l'axe de rotation de bague, se trouvent dans un plan qui est pénétré approximativement perpendiculairement par l'axe de rotation de bague.

4. Disposition de roulements selon la revendication 3, **caractérisée en ce que** le plan des corps de roulement (6) avec des axes de rotation essentiellement parallèles à l'axe de rotation de bague divise en deux segments la surface (17, 18, 21, 26) de chaque bague (2, 3) tournée vers la fente (4) commune, de ces deux segments respectivement un seul (17, 21) présente un (des) chemin(s) roulement (8, 9) pour des corps de roulement (5) avec des axes de rotation étant essentiellement dans un sens radial par rapport à l'axe de rotation de bague.

5. Disposition de roulements selon l'une des revendications précédentes, **caractérisée en ce que** le (tous les) chemin(s) de roulement (8, 9) pour des corps de roulement (6) avec des axes de rotation étant en sens radial par rapport à l'axe de rotation de bague sont tournés au niveau de chaque bague (2, 3) uniquement vers une seule face frontale, de préférence vers la face frontale (21, 31) opposée à la face de raccordement (22, 33) correspondante (débordant en sens axial par rapport à l'axe de rotation de bague).

6. Disposition de roulements selon l'une des revendications précédentes, **caractérisée en ce que** tous les corps de roulement (5) avec des axes de rotation étant en sens radial par rapport à l'axe de rotation de bague se trouvent dans un seul et unique plan commun.

7. Disposition de roulements selon l'une des revendications précédentes, **caractérisée en ce qu'**une rangée de corps de roulement (5) dont les axes de rotation sont en sens radial par rapport à l'axe de rotation de bague, est formée par des rouleaux divisés transversalement par rapport à leur sens longitudinal.

8. Disposition de roulements selon l'une des revendications précédentes, **caractérisée en ce que** tous les corps de roulement (5, 6) ayant respectivement une forme symétrique, en particulier une forme de rouleau cylindrique, de rouleau conique, d'aiguille ou de barillet par rapport à un axe de rotation défini, indépendamment de l'alignement de leur axe de rotation, présentent des diamètres pratiquement égaux, c'est-à-dire avec un écart inférieur à ± 10%, en particulier avec un écart inférieur à ± 6%, en particulier avec un écart inférieur à ± 2%.

9. Disposition de roulements selon l'une des revendications précédentes, **caractérisée en ce que** tous les corps de roulement (5, 6) ayant respectivement une forme symétrique ainsi qu'une forme de rouleau ou de barillet par rapport à un axe de rotation défini, se trouvent dans exactement deux plans parallèles l'un à l'autre.

10. Disposition de roulements selon l'une des revendications précédentes, **caractérisée en ce qu'**au moins un chemin de roulement (10, 11) pour une rangée de corps de roulement (6) ayant respectivement une forme symétrique ainsi qu'une forme de rouleau cylindrique, de rouleau conique, d'aiguille ou de barillet par rapport à un axe de rotation défini, dont les axes de rotation sont parallèles à l'axe par rapport à l'axe de rotation de bague, est formé par une rainure (11) s'étendant tout autour avec des flancs latéraux droits, de préférence parallèles l'un à l'autre et en particulier avec une section approximativement rectangulaire.

11. Disposition de roulements selon la revendication 10, **caractérisée en ce que** le chemin de roulement (11) en forme de rainure est formé au niveau d'une surface latérale (18) convexe de la bague (3) intérieure radiale.

12. Disposition de roulements selon l'une des revendications précédentes, **caractérisée en ce que** la bague (3) intérieure radiale présente la section approximativement en L.

13. Disposition de roulements selon l'une des revendications précédentes, **caractérisée en ce que** respectivement une cage (20, 27, 29) et/ou des éléments d'écartement sont prévus dans la zone d'au moins une rangée de corps de roulement (5-7), de préférence dans la zone de toutes les rangées de corps de roulement (5-7).

14. Disposition de roulements selon l'une des revendications précédentes, **caractérisée en ce que** les corps de roulement (5, 6) ayant respectivement une forme symétrique ainsi qu'une forme de rouleau cylindrique, de rouleau conique, d'aiguille ou de barillet par rapport à un axe de rotation défini, présentent des faces frontales ou bords frontaux bombés.

15. Disposition de roulements selon l'une des revendications précédentes, **caractérisée en ce que** le sens des axes longitudinaux des alésages borgnes (23) rencontre ou est au moins tangent au chemin de roulement (8) de la bague (2) correspondante pour au moins une rangée de corps de roulement (5) ayant respectivement une forme symétrique ainsi qu'une forme de rouleau cylindrique, de rouleau conique, d'aiguille ou de barillet par rapport à un axe de rotation défini, dont les axes de rotation sont dans un sens radial par rapport à l'axe de rotation de bague.

16. Disposition de roulements selon l'une des revendications précédentes, **caractérisée en ce qu'**une denture (25) s'étendant tout autour d'une bague (2, 3) est prévue, de préférence au niveau de la bague extérieure radiale (2), en particulier au niveau d'une surface latérale convexe (24) de celle-ci.
